# FASCICULE DE BREVET EUROPEEN

(11) **EP 4 499 944 B1**
(45) Date de publication et mention de la délivrance du brevet: **19.11.2025**
(21) Numéro de dépôt: 23714746.7
(22) Date de dépôt: 28.03.2023
(51) Int. Cl.: E04F 11/18, E04F 10/00, F16B 2/10

(54) **MONTANT POUR LA FIXATION D'UN PANNEAU, BALCON A LA FRANCAISE, UN BRISE VUE OU BRISE-SOLEIL COMPRENANT UN TEL MONTANT**
PFOSTEN ZUR BEFESTIGUNG EINES PANEELS SOWIE FRANZÖSISCHER BALKON, SICHTSCHUTZ ODER SONNENSCHUTZ MIT EINEM SOLCHEN PFOSTEN
POST FOR SECURING A PANEL, AND FRENCH-STYLE BALCONY, PRIVACY SCREEN OR SUNSHADE COMPRISING SUCH A POST

(30) Priorité: 30.03.2022 FR 2202852
(43) Date de publication de la demande: 05.02.2025
(73) Titulaire: SB Ingénierie, 74330 Poisy (FR)
(72) Inventeur: ROUIF, Léandre, 74330 Epagny (FR); CHAPEL, Romain, 74540 Saint Sylvestre (FR); GIACOMETTI, Sylvianne, 74330 Choisy (FR)
(74) Mandataire: Ipsilon
(86) Numéro de dépôt international: PCT/EP2023/057985
(87) Numéro de publication internationale: WO 2023/186882

(56) Documents cités:
- CH-A2- 709 045
- DE-U1- 202017 100 181

## Description

### Domaine technique

La présente invention concerne le domaine de la construction, et notamment des garde-corps à panneaux tels que des vitres. En particulier, l'invention concerne les garde-corps pour balcons dits à la française, composés d'un simple panneau attaché à un encadrement de porte-fenêtre, et les brise-soleil comportant un panneau, qui peut adopter diverses orientations, être fixe ou orientable.

Les balcons dits à la française sont des balcons de surface réduite, composés essentiellement d'une porte-fenêtre avec la maçonnerie formant l'encadrement de ladite porte-fenêtre, et d'un panneau formant garde-corps, attaché à l'encadrement de ladite porte-fenêtre.

Ils permettent avec un aménagement minimal, d'offrir la possibilité aux usagers de de profiter de l'extérieur, notamment sans nécessiter de travaux d'aménagement exhaustifs puisqu'aucune dalle ne doit être coulée ou aucune extension formant sol ne doit être construite. Seule la fixation du panneau formant garde-corps à l'encadrement est nécessaire.

Les brise-soleil sont des aménagements disposés devant des fenêtres et autres ouvertures. Ils comportent un panneau arrêtant au moins partiellement les rayons du soleil, par exemple en réfléchissant ou absorbant la partie infra-rouge du spectre.

Ils permettent d'améliorer la gestion de la température du bâtiment de façon passive, sans recourir à une climatisation ou en ayant moins recours à ladite climatisation.

### Art antérieur

On connaît notamment des panneaux fixés directement au mur, le panneau dépassant latéralement de l'encadrement de la porte ou fenêtre devant laquelle le balcon à la française est aménagé.

Les panneaux sont par exemple pré-percés, et des vis les maintiennent contre le mur, dans lequel des chevilles forment par exemple une attache coopérant avec les vis.

On connaît aussi des balcons à montants latéraux, qui comportent des montants verticaux de chaque côté du panneau. Les montants, outre leur fonction de liaison mécanique entre le mur et le panneau, peuvent notamment avoir un but esthétique.

Les montants permettent notamment de choisir entre des balcons à la française dits « en applique » où le panneau est devant le mur et s'étend latéralement au-delà de l'encadrement de la porte ou fenêtre, et les balcons dits « en tableau » où le panneau est contenu dans l'encadrement de la porte ou fenêtre.

Dans un balcon « en tableau » les vis sont coplanaires avec le panneau, et nécessitent donc un élément supplémentaire pour la fixation au mur. Cet élément supplémentaire, jouant le rôle de liaison entre le panneau et le mur, est le montant latéral de chaque côté du panneau.

Les balcons à la française avec des montants se montent généralement en plusieurs temps, avec notamment dans un premier temps la fixation des montants au mur, puis dans un deuxième temps du panneau aux montants.

Les balcons pouvant notamment être installés en hauteur, à un ou plusieurs étages du sol, la manipulation et la fixation du panneau doivent être faites avec la plus grande attention afin d'éviter sa chute, potentiellement dangereuse.

Les montants présentent généralement un moyen de fixation au mur, sous forme de perçages et de vis coopérant avec des chevilles dans le mur, et un moyen de serrage, permettant d'assurer le positionnement du panneau.

Le moyen de fixation au mur est généralement mis en place avant le positionnement et la fixation du panneau par le moyen de serrage. Par exemple, on connaît des balcons dans lesquels les montants ont une section en U, les vis accrochées au mur étant au fond du U. Des joints sont intercalés entre les bras du U et le panneau qu'ils pincent. Les joints étant compressés à l'insertion, ils maintiennent alors le panneau de façon hyperstatique.

Les panneaux sont généralement lourds et encombrants, ce qui complique leur manipulation.

Il existe en conséquence un risque de chute du panneau lorsqu'il est mis en place mais que le moyen de serrage n'est pas encore serré, ou lors de la fixation définitive du panneau. La chute du panneau, si le balcon est situé en hauteur, peut être très dangereuse pour les personnes en-dessous, en plus d'impliquer le bris du panneau.

Le document CH709045 décrit par exemple une grande variété de moyens de fixation d'un panneau à un montant pouvant convenir à des balcons. Cependant les modes de réalisation de ce document ont recours à des vis qui sont à serrer depuis l'extérieur du balcon.

Le document DE20201710018 décrit un balcon à la française, dans lequel la fixation du panneau se fait par insertion de celui-ci entre deux joints en polymère déformables compressés lors de ladite insertion. L'insertion du panneau se fait donc sous contrainte, ce qui nécessite de manipuler avec force le panneau, et augmente donc la probabilité d'accident par chute du panneau.

Les mêmes problématiques sont rencontrées dans le cas des brise-soleil, où les montants sont horizontaux, et relient le panneau à une charnière ou une base mobile en rotation.

Ainsi, il existe un besoin pour un montant, de balcon dit à la française et/ou de brise-soleil, qui permette un montage à la fois sûr et facile. Un tel montant doit en outre être solide et durable, afin de ne pas compromettre la sécurité des utilisateurs.

### Exposé de l'invention

Afin de répondre à ce besoin, l'invention propose un montant pour la fixation d'un panneau, comprenant :
- une base, présentant deux pans, sensiblement orthogonaux entre eux, dont :
   * un pan parallèle au plan du panneau, portant à son extrémité libre un joint linéaire compressif, et
   * un pan orthogonal au plan du panneau,
- un volet, articulé par rapport à la base au niveau de l'extrémité libre du pan orthogonal au plan du panneau, portant au niveau de son extrémité libre un joint linéaire compressif complémentaire, les joints linéaires compressifs compressant un panneau pincé entre la base et le volet à l'état assemblé,
- un coin, présentant un insert, inséré au niveau de l'articulation entre la base et le volet à l'état assemblé, qui, lorsqu'inséré, bloque ladite articulation dans une position pinçant le panneau.

Le verrouillage par le coin du volet qui, une fois bloqué, pince et maintient le panneau, permet une pose plus rapide et simplifiée.

L'articulation peut être composée d'un repli courbe au niveau de l'extrémité libre du pan orthogonal au plan du panneau de la base, et d'un repli courbe au niveau du volet, les deux replis courbes étant imbriqués l'un dans l'autre lors de l'assemblage.

Le coin comporte avantageusement un doigt à section triangulaire, et un insert compressible, à section en V, entourant le doigt à section triangulaire et contraint en compression lorsqu'inséré au niveau de l'articulation, et des moyens d'encliquetage, encliquetés avec le volet et/ou la base lorsque le coin bloque l'articulation.

L'insert compressible, avec les joints linéaires extrémaux, maintient le panneau de façon hyperstatique.

Le coin peut comporter une façade décorative, couvrant au moins partiellement les parois extérieures du montant lorsque le coin est inséré.

Le montant peut comporter un fond présentant une protubérance avec une face inclinée, orientée vers l'extérieur de la façade et une face d'arrêt, orientée vers l'intérieur de la façade, et le volet comporte alors une arête entrant en prise avec la face d'arrêt de la protubérance lorsque le panneau est pincé entre le volet et la base.

Le fond peut présenter des pattes et la base des rails dans lesquels les pattes sont engagées à l'état assemblé, le montant comporte alors des perçages et des vis pour la fixation du fond.

Le fond peut présenter une excroissance contre laquelle vient en appui le chant du panneau lorsqu'il est fixé dans le montant.

Ladite excroissance peut notamment comporter un moyen de fixation d'un joint compressif de fond, et le fond comporte alors avantageusement en outre un joint compressif de fond inséré dans le moyen de fixation.

Ce joint compressif de fond peut notamment comporter à son extrémité en contact avec le fond une semelle en matériau polymère, insérée à l'état assemblé dans un retrait du fond, et contre laquelle le panneau vient en appui lorsqu'installé.

La base peut comporter des perçages de fixation sur au moins un des pans, et notamment sur les deux pans.

La base et le volet sont avantageusement réalisés par extrusion de métal.

L'invention se rapporte aussi au balcon, en particulier de type à la française, et au brise-soleil qui comportent au moins un montant tel que mentionné et un panneau pincé par le montant entre le volet et la base.

### Brève description des figures

D'autres caractéristiques et avantages de la fixation selon l'invention apparaîtront à la lecture de la description détaillée des figures ci-après, figures parmi lesquelles :
- la figure 1 est une vue en perspective d'un balcon à la française pourvu d'un garde-corps selon l'invention,
- la figure 2 est une vue en coupe d'un montant du balcon de la figure 1,
- la figure 3 est une vue en perspective d'un capuchon du montant de la figure 2
- la figure 4 est une vue en perspective d'un fond pour le montant de la figure 2,
- la figure 5 est une vue de dessus du montant de la figure 2 en cours d'assemblage,
- la figure 6 est une vue en coupe d'un balcon à la française monté en applique,
- la figure 7 est une vue en coupe d'un balcon à la française monté en tableau,
- la figure 8 est une vue en perspective schématique d'un brise-soleil,
- la figure 9 est une vue en coupe d'un mode de réalisation alternatif de montant,
- la figure 10 est une vue en perspective partielle d'un mode de réalisation supplémentaire de fond pour le montant,
- la figure 11 est une vue de dessus en coupe d'un montant intégrant un fond de la figure 10.

Les modes de réalisation représentés sont donnés à titre d'exemples illustratifs et non limitatifs. D'autres modes de réalisation sont directement dérivables de ceux-ci par modifications mineures et combinaison de différents modes de réalisation.

### Description détaillée des figures

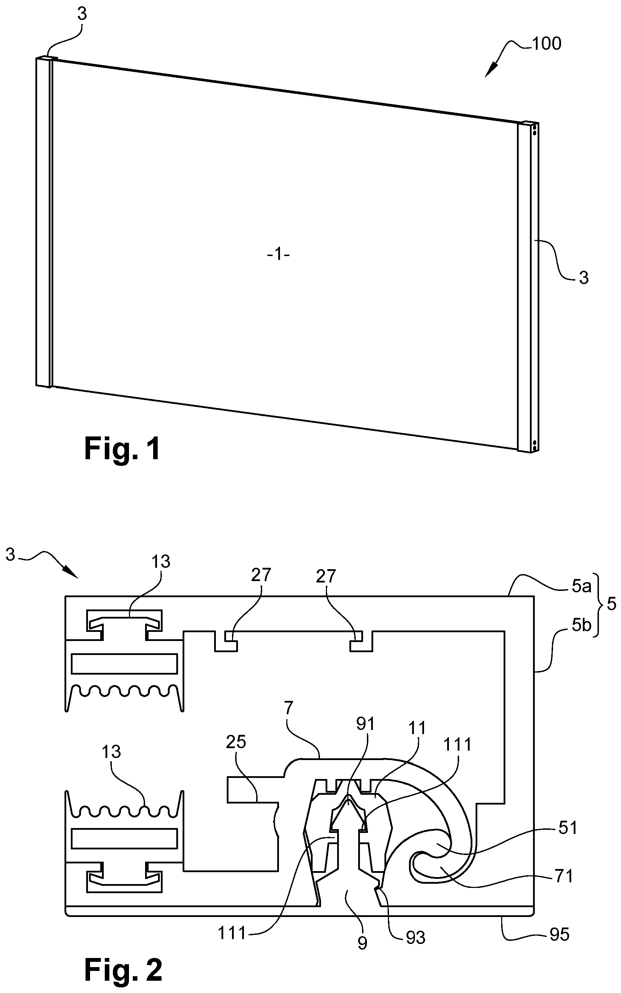

La figure 1 est une vue en perspective d'un balcon 100, en particulier du type dit « à la française ». Le balcon 100 comporte notamment un panneau 1, et deux montants 3, verticaux et situés de part et d'autre du panneau 1.

Les montants 3 sont en prise avec le panneau 1 qu'ils maintiennent en place.

Le panneau 1 est par exemple un panneau en verre trempé, notamment réalisé sous forme d'empilement de vitrages en verre trempé, avec des couches intercalaires de matière plastique.

En alternative, le panneau 1 peut être réalisé en verre feuilleté, en un seul vitrage de verre trempé, en pierre découpée ou en métal. Le panneau 1 peut notamment comporter des couches de sérigraphie, imprimées et/ou formant filtre pour la lumière incidente.

Pour l'orientation, le chant du panneau 1 donne une direction considérée longitudinale, les montants 3 et le bout du panneau 1 donnent une direction considérée verticale (bien que l'orientation finale du panneau 1 puisse varier, notamment si la façade est inclinée), et la troisième direction, considérée transverse, correspond à l'épaisseur du panneau 1.

Par « plan du panneau 1 » on entend ici, sauf indication contraire, le plan de la face ou plat du panneau 1.

Selon la direction transverse, on considère « intérieur » ou « vers l'intérieur » le sens orienté vers l'intérieur du bâtiment sur lequel est apposé le balcon 100, et le sens opposé, orienté vers l'extérieur du bâtiment, est considéré « extérieur » ou « vers l'extérieur ».

La figure 2 est une vue en coupe selon un plan horizontal d'un montant 3.

Le montant 3 comporte une base 5 et un volet 7, articulé à la base 5. La base 5 et le volet 7 sont notamment réalisés sous forme de profilés, en particulier extrudés. Le profil montré en coupe en figure 2 est donc sensiblement identique sur toute la hauteur du montant 3.

La base 5 présente deux pans, l'un 5a parallèle au panneau 1 et à la façade, l'autre 5b perpendiculaire au premier et donc au panneau 1 et à la façade.

La base 5 et le volet 7 sont articulés entre eux par une articulation, composée d'un repli courbe 51 au niveau de l'extrémité libre du pan 5b perpendiculaire au plan du panneau 1 et d'un repli courbe 71 au niveau du volet 7, les deux replis courbes 51, 71 étant imbriqués l'un dans l'autre.

De telles articulations sont appelées articulations de type « Yoder » et sont utilisées dans le domaine automobile.

Les replis courbes 51, 71 sont notamment formés de sorte que le volet 7 peut s'ouvrir vers l'extérieur, notamment avec un angle d'ouverture supérieur à 15° et plus avant avec un angle maximal supérieur à 80°. Les replis courbes 51, 71 sont aussi conformés de sorte que le volet 7 peut être enfoncé vers l'intérieur, notamment avec un angle de rotation moindre, de l'ordre de 5 à 10°Les replis courbes 51,71 se terminent par des renflements, entrant en prise mutuelle ou en prise avec une paroi de l'autre repli courbe 51, 71 lorsqu'un débattement maximal est atteint.

Un coin 9 est inséré, à l'état assemblé du montant 3, entre le volet 7 et la base 5, de façon à bloquer l'articulation 51, 71 entre le volet 7 et la base 5. En particulier, le coin 9, lorsqu'inséré, empêche l'ouverture du volet 7 au-delà de l'inclinaison dans laquelle il présente une surface extérieure sensiblement parallèle au plan du plat du panneau 1.

Plus généralement, le volet 7 peut s'ouvrir vers l'extérieur de façon suffisante pour permettre l'insertion du panneau 1 par devant, et vers l'intérieur de façon suffisante pour permettre l'insertion et l'encliquetage du coin 9.

Le coin 9 présente en particulier un doigt 91 à section triangulaire, ici en particulier en forme de flèche pointant vers l'intérieur, et un insert compressible 11, à section en V, dans lequel est inséré le doigt 91 du coin 9.

D'autres formes d'extrémité du doigt 91, par exemple en demi-cercle ou ellipse, trapézoïdale, etc. sont bien sûr envisagées.

L'insert compressible 11 est compressé entre le volet 7 et la base 5 lorsque le volet 7 est sensiblement parallèle au plan du plat du panneau 1, et tend alors à incliner, par sa réaction élastique, le volet 7 vers l'intérieur.

En l'absence du doigt 91 du coin 9, l'insert compressible 11 peut notamment être fermé et comprimé plus facilement par le volet 7 qui s'ouvre vers l'extérieur.

L'insert compressible 11 présente avantageusement deux redents 111 sur les surfaces intérieures de la section en V. Ces redents 111 entrent en prise avec des arêtes du doigt 91 du coin 9, et le volet 7 présente une encoche, dans laquelle la pointe de la section en V est insérée à l'état assemblé.

Le coin 9 présente des moyens d'encliquetage, ici sous forme d'un épaulement 93

L'extrémité du volet 7 opposée à l'articulation 51, 71 et l'extrémité libre du pan parallèle à la façade de la base 5 comportent chacune un joint compressif linéaire 13. Ces joints compressifs linéaires 13 sont par exemple des bandes de matériau polymère, et compressent, à l'état assemblé, le panneau 1.

Le volet 7 et la base 5 présentent en particulier un retrait à section en T, dans lequel est inséré un rail à section en T correspondante des joints compressifs linéaires 13.

Les joints compressifs linéaires 13 peuvent en alternative être collés, vissé ou rivetés à la base 5 et au volet 7. Ces joints compressifs linéaires 13 sont compressés lorsque le panneau 1 est pincé entre le volet 7 et la base 5, et que le coin 9 est inséré. Leur réaction élastique tend à ouvrir le volet 7 vers l'extérieur, et s'oppose ainsi à l'action de l'insert compressible 11.

Le coin 9 et en particulier l'insert compressible 11, en combinaison avec les joints compressifs linéaires 13, maintiennent le panneau 1 de façon hyperstatique. Notamment, les actions antagonistes de ces éléments permettent d'absorber des vibrations transverses et la dilatation du panneau 1.

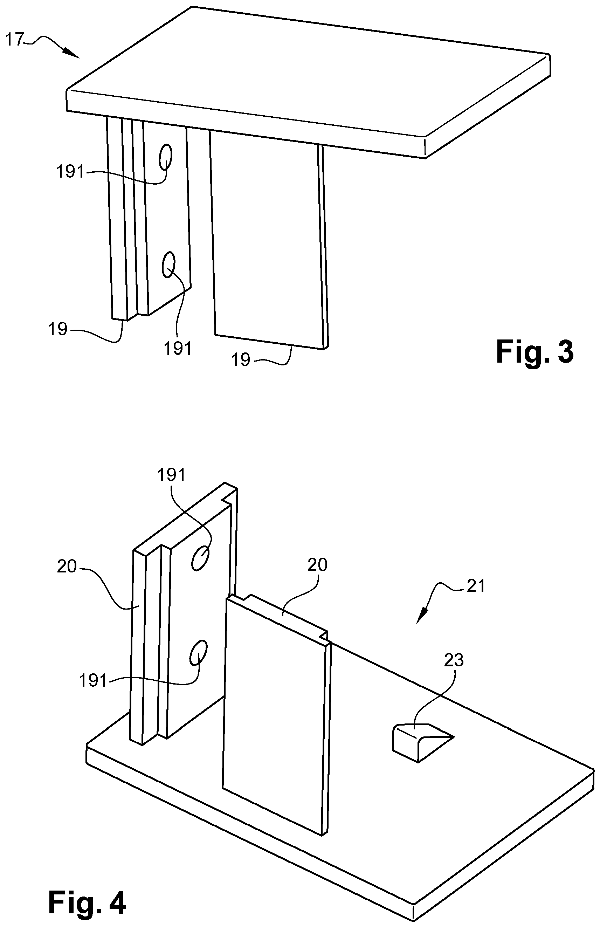

La figure 3 montre un couvercle 17, qui est conformé pour fermer, lorsqu'installé, l'extrémité supérieure du montant 3.

Le couvercle 17 comporte notamment deux pattes 19 sur deux côtés perpendiculaires, et l'une au moins des pattes 19 présente des perçages 191, coopérant, à l'état installé, avec les vis 15 pour fixer le couvercle 17 au montant 3.

La figure 4 montre un fond 21, qui est conformé pour fermer, lorsqu'installé, l'extrémité inférieure du montant 3.

Le fond 21 comporte aussi deux pattes 20, dont l'une au moins présente des perçages 191 coopérant avec les vis 15 à l'état assemblé.

Le fond 21 présente une protubérance 23 à section triangulaire, avec une face inclinée, orientée vers l'extérieur et une face d'arrêt, sensiblement verticale, orientée vers l'intérieur de la façade. La face d'arrêt maintient, à l'état assemblé, le volet 7 en position fermée.

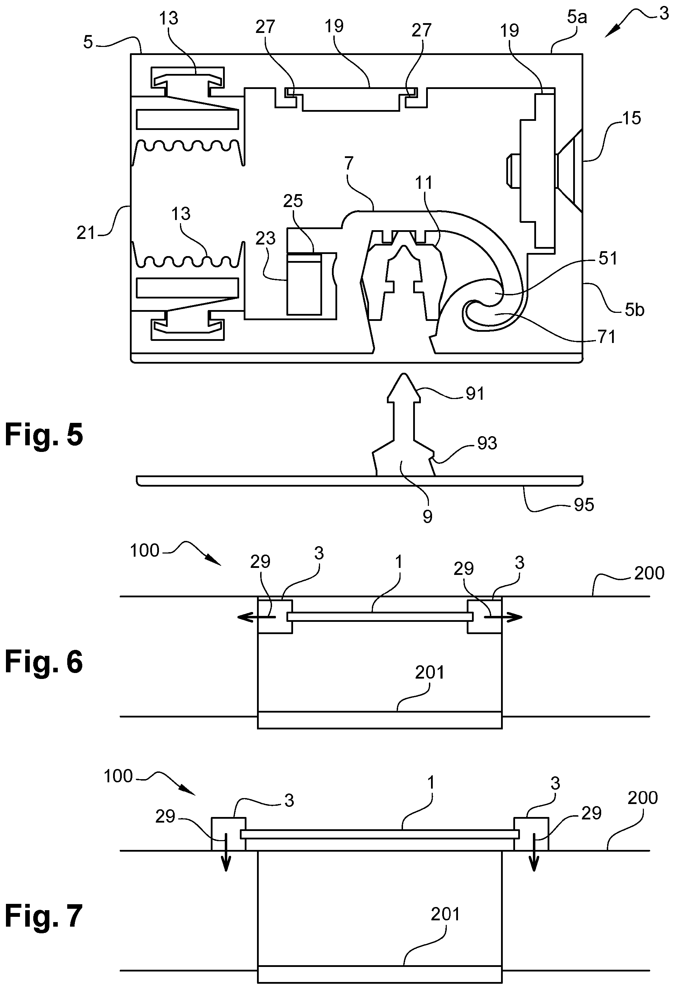

La figure 5 montre en vue de dessus en coupe un fond 21 en prise avec le volet 7 et la base 5.

Le volet 7 comporte une arête 25 entrant en prise avec la face d'arrêt de la protubérance 23 lorsque le panneau est pincé entre le volet 7 et la base 5.

L'arête 25 est, dans le mode de réalisation représenté, portée par une excroissance du volet 7, qui est longitudinale.

La base 5 comporte notamment des rails 27 dans lesquels les pattes 19, 20 du couvercle 17 et du fond 21 sont insérées. Le pan perpendiculaire au plat du panneau 1 de la base 7 comporte des perçages dans lesquels sont insérées des vis 15.

Les vis 15, insérées dans les perçages 191 des pattes 19, 20 et de la base 5 fixent le couvercle 17 et le fond 21.

Des perçages supplémentaires sont notamment prévus pour la fixation des montants au mur au moyen de vis et chevilles par exemple.

En figure 5, le coin 9 est en cours d'insertion entre la base 5 et le volet 7. Le coin 9 est notamment représenté en retrait par rapport à son emplacement à l'état assemblé. Le coin 9 comporte une façade décorative 95, qui s'étend depuis la base du coin 9, à l'opposé du doigt 91.

La façade décorative 95 recouvre, lorsque le coin 9 est inséré, la surface apparente de la base 5 et du volet 7, et recouvre ainsi la surface apparente du montant 3. La façade décorative 95 peut être d'un autre matériau, d'une autre finition ou recouverte d'une couche décorative.

Dans le mode de réalisation représenté, la façade décorative 95 recouvre la surface frontale, extérieure et parallèle au plan du panneau 1. Dans des modes de réalisation alternatifs, la façade décorative 95 peut en outre recouvrir la face latérale extérieure du montant 3.

Notamment, le fait que le coin 9 porte une façade décorative 95 implique que les autres éléments, à savoir base 5 et volet 7, peuvent être identiques et réalisés dans des matériaux sélectionnés pour leur solidité et leur tenue dans le temps. Notamment, les bases 5 et volet 7 peuvent être réalisés par extrusion en aluminium ou acier inoxydable.

Seul le coin 9 ou au moins la façade décorative 95 doivent alors être réalisés avec un matériau ou une finition décorative.

Les figures 6 et 7 illustrent les deux façons de monter le balcon 100 à un mur 200. Le mur 200 est ici percé pour une fenêtre 201, dont l'encadrement est partiellement fermé une fois le balcon 100 en place.

En figure 6 le balcon 100 est installé en tableau : les montants 3 sont installés dans l'encadrement de la fenêtre 201, sur les parois transverses de l'encadrement.

Les montants 3 sont alors fixés par des moyens de fixation 29, par exemple des vis et chevilles, qui sont orientés parallèles à la façade.

Le montage en tableau permet d'éviter que le balcon 100 ne dépasse du mur 200.

En figure 7, le balcon 100 est monté en applique : les montants 3 sont installés sur la paroi extérieure du mur 200, de part et d'autre de l'encadrement de la fenêtre 201.

Les montants 3 sont alors fixés par des moyens de fixation 29 qui sont orientés orthogonalement à la façade.

Le montage en applique maximise la surface de balcon 100 mais implique que les montants 3 et le panneau 1 sont suspendus au-delà de l'encadrement et du mur 200.

La base 5 des montants 3 comporte par exemple des perçages de fixation, non-représentés, qui coopèrent avec les moyens de fixation 29.

Pour un montage en tableau, lesdits perçages de fixation sont par exemple disposés sur le pan 5b perpendiculaire à la façade de la base 5. Pour un montage en applique, les perçages de fixation sont avantageusement pratiqués dans le pan 5a parallèle à la façade.

Pour une économie de logistique, il est notamment possible de réaliser les perçages de fixation sur les deux pans 5a, 5b de la base 5. Une même base 5 peut alors servir à la fois au montage en tableau et en applique.

L'assemblage du balcon 100 selon l'invention est donc simple et rapide.

La première étape est la fixation des bases 5 au mur 200, par exemple au moyen de chevilles et vis.

Le fond 21 est alors mis en place et fixé à la base 5 correspondante, au moyen des vis 15.

Le volet 7 est alors mis en place en translation depuis le haut, en imbriquant son repli courbe 71 avec le repli courbe 51 de la base 5. L'articulation de type « Yoder » permet notamment cette insertion en translation. Le fond 21 forme alors une butée à l'insertion du volet 7.

Le volet 7 est alors mis en position ouverte, orientée vers l'extérieur. Le panneau 1 peut alors être mis en place et le volet 7 ramené en position fermée.

Lors de la fermeture du volet 7, son arête 25 entre en prise avec la protubérance 23. Dans le sens de la fermeture, la face inclinée de ladite protubérance 23 va soulever le volet 7, qui peut se translater vers le haut. Lorsque le volet 7 atteint la position de fermeture, l'arête 25 atteint la pointe de la protubérance 23, et le volet 7 translate vers le bas sous l'effet de la gravité. L'arête 25 est alors en prise avec la face d'arrêt sensiblement verticale, et le mouvement de retour en position ouverte du volet 7 est empêché en l'absence d'un mouvement vers le haut.

Le panneau 1 est alors provisoirement maintenu.

Le coin 9 est alors inséré, ainsi que l'insert compressible 11, jusqu'à ce que l'épaulement 93 du coin 9 soit encliqueté avec le volet 7 ou la base 5. L'insertion du coin 9 verrouille le volet 7 en position fermée.

Le couvercle 17 est alors mis en place à l'extrémité supérieure, et fixé au moyen d'une vis 15 et des rails 27, comme le fond 21.

Le maintien provisoire du panneau 1 dans les montants 3 par l'arête 25 et la protubérance 23 contribue à la sécurité lors de l'installation. Ce maintien provisoire permet par exemple de relâcher le panneau 1 pour aller chercher les coins 9 et inserts compressibles 11.

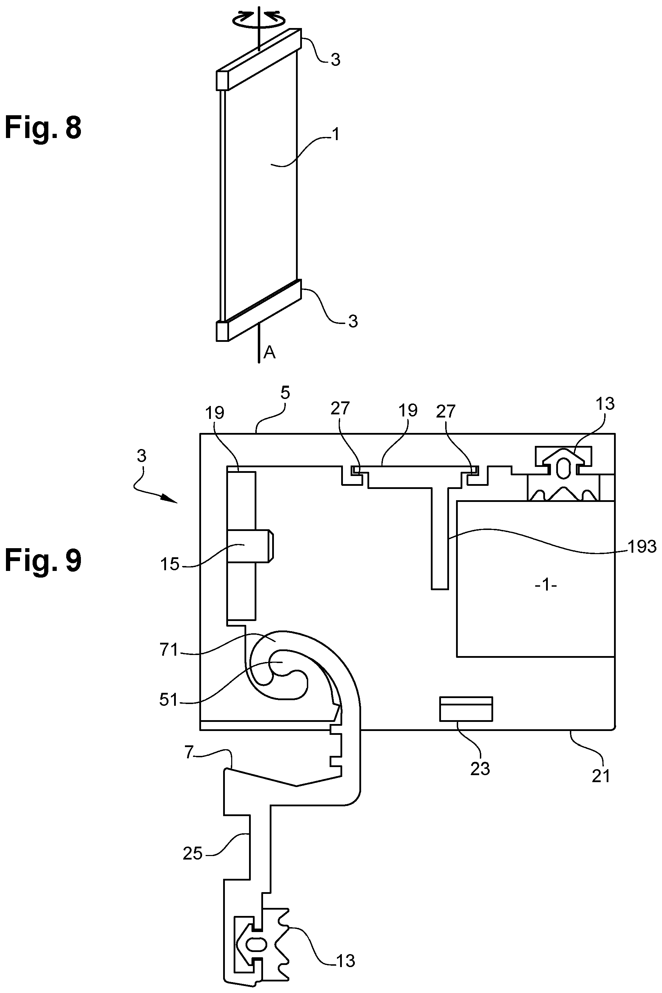

La figure 8 est une représentation schématique en perspective d'un brise-soleil 300 utilisant des montants 3 tels que précédemment décrits.

Ces montants 3 pincent un panneau 1, par exemple d'un verre actif ou filtrant une partie du spectre de la lumière qui le traverse.

Les montants 3 sont ici horizontaux, et fixent le panneau 1 à un mécanisme de rotation d'axe de rotation A, vertical. Le panneau 1 peut tourner autour dudit axe de rotation A de façon à pouvoir être orienté parallèlement aux rayons solaires incidents lorsqu'ils ne doivent pas être arrêtés ou filtrés par le panneau 1, ou orthogonalement aux rayons solaires lorsqu'une part importante du rayonnement solaire doit être arrêtée ou filtrée.

La forme des éléments composant les montants 3 sont inchangés, seule change l'orientation par rapport à la gravité (disposition horizontale au lieu de verticale) et par rapport à la façade 200 (rotation autour de l'axe de rotation A).

La figure 9 est une vue en coupe d'un mode de réalisation alternatif de montant 3. En figure 9, le volet 7 est montré en position d'ouverture, avec un angle de rotation d'environ 90° et donc une orientation transverse.

Dans ce mode de réalisation, l'arête 25 est portée par un retrait de la paroi longitudinale frontale du volet 7, et la protubérance 23 est disposée en conséquence proche du bord longitudinal extérieur ou frontal du fond 21.

Le retrait portant l'arête 25 est, à l'état installé, recouvert par la façade décorative 95 du coin 9 (non représentés en figure 9).

L'une des pattes 19 du fond 21 (et éventuellement du couvercle 17) présente une excroissance 193 formant butée longitudinale du panneau 1. L'excroissance 193 est notamment transverse et plane à l'état assemblé.

Le fond 21 et le couvercle 17. Le panneau 1 vient alors, en cas de translation longitudinale, en butée contre l'excroissance 193 parallèle au bout du panneau 1. Le panneau 1 est alors en appui contre l'excroissance avec une surface d'appui étendue, ce qui diminue les risques de fracture ou bris du panneau 1.

En effet, un jeu longitudinal du panneau 1 dans les montants 3 est requis, afin de pouvoir se dilater dans cette direction. Il en résulte en outre un jeu qui permet de diminuer les contraintes de dimensionnement du panneau 1 et lors de la pose des montants 3 sur le mur 200.

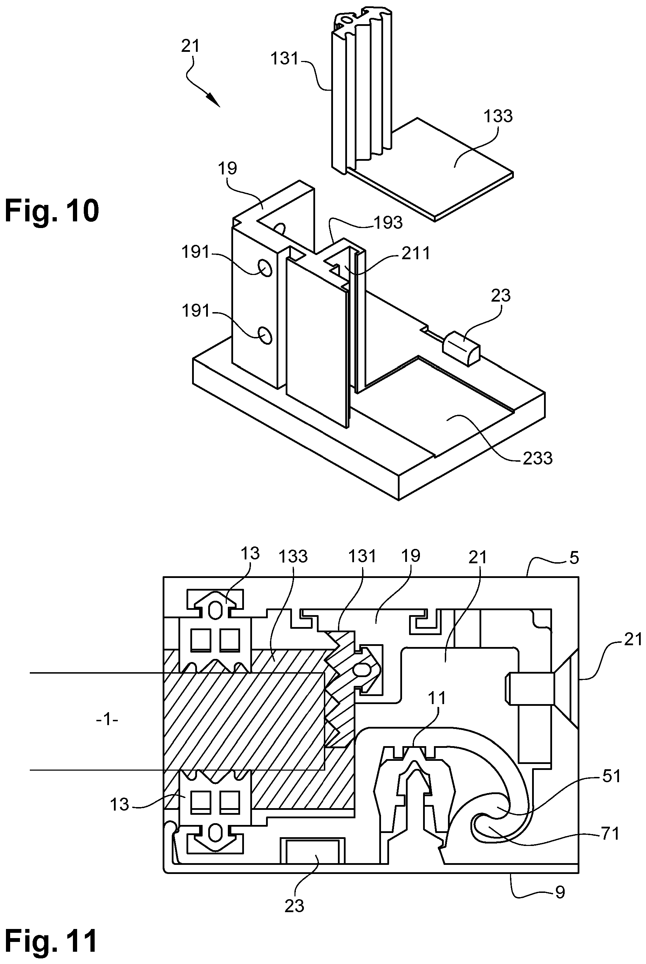

La figure 10 illustre un mode de réalisation supplémentaire de fond 21 pour montant 3 de balcon 100.

Le fond 21 de la figure 10, comporte sur l'excroissance 193 de l'une de ses pattes 19, formant butée pour le chant du panneau 1, un rail 211 au moyen duquel est fixé un joint compressif de fond 131.

Le joint compressif de fond 131 est semblable aux joints compressifs aux extrémités libres de la base 5 et du volet 7. Il est en matériau polymère et compressible.

Le joint compressif de fond 131 comporte à son extrémité en appui contre le fond 21 une semelle 133, venant de matière avec le joint compressif de fond 131, sensiblement plane. La semelle 133 est, lorsque le joint compressif de fond 131 est inséré dans le rail 211, contenue dans un retrait 233 de forme correspondante de la paroi horizontale du fond 21.

La figure 11 montre le fond 21 de la figure 10 installé dans un montant 3 et avec un panneau 1 partiellement représenté en prise avec ledit montant 3.

En figure 11 on voit que le panneau 1 est en appui contre les deux joints compressifs 13 de la base 5 et du volet 7, contre le joint compressif de fond 131 au niveau de son chant, et contre la semelle 133 au niveau de sa face inférieure.

Le panneau 1 est donc uniquement en contact avec des éléments en polymère liés aux joints compressifs 13, 131, et n'a donc aucun contact avec le matériau métallique du montant 3. La probabilité de bris du panneau 1 est alors réduite, notamment par fatigue du fait d'une accumulation de microfractures dues aux vibrations transmises par le métal du montant 3 au panneau 1.

Les panneaux 1 étant généralement lourds (dizaines voire centaines de kilogrammes) leur manipulation est peu aisée, et potentiellement accidentogène. La fixation par l'insertion du coin 9 permet de réduire les étapes nécessaires à la fixation du panneau 1. Le maintien provisoire au moyen de la protubérance 23 permet de minimiser encore plus la manipulation des panneaux 1, qui ne doivent être mis en place qu'une seule fois.

Le montage du balcon 100 ou brise-soleil 300 avec les montants 3 selon l'invention implique aussi moins de visserie, et aucun perçage n'est pratiqué dans le panneau 1.

## Revendications

1. Montant pour la fixation d'un panneau (1), comprenant :
- une base (5), présentant deux pans (5a, 5b), sensiblement orthogonaux entre eux, dont :
* un pan (5a) parallèle au plan du panneau (1), portant à son extrémité libre un joint linéaire compressif (13), et
* un pan (5b) orthogonal au plan du panneau (1),
- un volet (7), articulé par rapport à la base (5) au niveau de l'extrémité libre du pan orthogonal (5b) au plan du panneau (1), portant à son extrémité opposée à l'articulation (51, 71) un joint linéaire compressif (13) complémentaire, les joints linéaires compressifs (13) compressant le panneau (1) pincé entre la base (5) et le volet (7) à l'état assemblé,
- un coin (9), présentant un insert (11), inséré au niveau de l'articulation (51, 71) entre la base (5) et le volet (7) à l'état assemblé, qui, lorsqu'inséré, bloque ladite articulation (51, 71) dans une position pinçant le panneau (1), **caractérisé en ce que** le coin (9) comporte des moyens d'encliquetage (93), encliquetés avec le volet (7) et/ou la base (5) lorsque le coin (9) bloque l'articulation (51, 71).

2. Montant selon la revendication 1, **caractérisé en ce que** l'articulation (51, 71) est composée d'un repli courbe (51) au niveau de l'extrémité libre du pan orthogonal au plan du panneau de la base (5) et d'un repli courbe (71) au niveau du volet (7), les deux replis courbes (51, 71) étant imbriqués l'un dans l'autre lors de l'assemblage.

3. Montant selon la revendication 1 ou 2, **caractérisé en ce que** le coin (9) comporte un doigt (91), et un insert compressible (11), entourant le doigt (91) à section triangulaire et contraint en compression lorsqu'inséré au niveau de l'articulation (51, 71).

4. Montant selon la revendication 3, **caractérisé en ce que** le doigt (91) comporte une section triangulaire, et l'insert compressible (11) une section en V.

5. Montant selon l'une des revendications précédentes, **caractérisé en ce que** le coin (9) comporte une façade décorative (95), couvrant au moins partiellement les parois extérieures du montant (3) lorsque le coin (9) est inséré.

6. Montant selon l'une des revendications précédentes, **caractérisé en ce qu'**il comporte un fond (21) présentant une protubérance (23) avec une face d'arrêt, orientée vers l'intérieur de la façade sur laquelle est montée le montant, et **en ce que** le volet (7) comporte une arête (25) entrant en prise avec la face d'arrêt de la protubérance (23) lorsque le panneau (1) est pincé entre le volet (5) et la base (7).

7. Montant selon la revendication 6, **caractérisé en ce que** le fond (21) présente des pattes (20) et la base (5) des rails (27) dans lesquels les pattes (20) sont engagées à l'état assemblé, et **en ce qu'**il comporte des perçages et des vis (15) pour la fixation du fond (21).

8. Montant selon la revendication 7, **caractérisé en ce que** le fond (21) présente une excroissance (193) contre laquelle vient en appui le chant du panneau (1) lorsqu'il est fixé dans le montant (3).

9. Montant selon la revendication précédente, **caractérisé en ce que** l'excroissance (193) comporte un moyen de fixation d'un joint compressif de fond (131), et **en ce qu'**il comporte en outre un joint compressif de fond (131) inséré dans le moyen de fixation.

10. Montant selon la revendication précédente, **caractérisé en ce que** le joint compressif de fond (131) comporte en outre à son extrémité en contact avec le fond (21) une semelle en matériau polymère, insérée à l'état assemblé dans un retrait (133) du fond (21), et contre laquelle le panneau (1) vient en appui lorsqu'installé.

11. Montant selon l'une des revendications précédentes, **caractérisé en ce que** la base (5) comporte des perçages de fixation sur au moins un des pans.

12. Montant selon l'un des revendications précédentes, **caractérisé en ce que** la base (5) comporte des perçages de fixation sur les deux pans.

13. Montant selon l'une des revendications précédentes, **caractérisé en ce que** la base (5) et le volet (7) sont réalisés par extrusion de métal.

14. Balcon, en particulier de type à la française, **caractérisé en ce qu'**il comporte au moins un montant (3) selon l'une des revendications précédentes et un panneau (1) pincé par le montant (3) entre le volet (7) et la base (5).

15. Brise-soleil **caractérisé en ce qu'**il comporte au moins un montant (3) selon l'une des revendications précédentes et un panneau (1) pincé par le montant (3) entre le volet (7) et la base (5).

## Patentansprüche

1. Pfosten zur Befestigung eines Paneels (1), umfassend:
- eine Basis (5), die zwei Bereiche (5a, 5b) aufweist, die im Wesentlichen rechtwinklig zueinander sind, wobei davon:
* ein Bereich (5a) parallel zur Ebene des Paneels (1) ist, wobei er an seinem freien Ende mit einer geradlinigen komprimierbaren Dichtung (13) versehen ist, und
* ein Bereich (5b) rechtwinklig zur Ebene des Paneels (1) ist,
- eine Klappe (7), die auf Höhe des freien Endes des Bereichs (5b), welcher rechtwinklig zur Ebene des Paneels (1) ist, an der Basis (5) angelenkt ist, wobei sie an ihrem Ende, welches dem Gelenk (51, 71) entgegengesetzt ist, mit einer komplementären geradlinigen komprimierbaren Dichtung (13) versehen ist, wobei die geradlinigen komprimierbaren Dichtungen (13) das Paneel (1) zusammendrücken, welches im zusammengefügten Zustand zwischen der Basis (5) und der Klappe (5) eingeklemmt ist,
- einen Keil (9), der einen Einsatz (11) aufweist und im zusammengefügten Zustand auf Höhe des Gelenks (51, 71) zwischen der Basis (5) und der Klappe (7) eingefügt ist, wobei er, wenn er eingefügt ist, das Gelenk (51, 71) in einer Position blockiert, in welcher das Paneel (1) eingeklemmt ist, **dadurch gekennzeichnet, dass** der Keil (9) Einrastmittel (93) aufweist, die mit der Klappe (7) und/oder der Basis (5) einrasten, wenn der Keil (9) das Gelenk (51, 71) blockiert.

2. Pfosten nach Anspruch 1, **dadurch gekennzeichnet, dass** das Gelenk (51, 71) sich aus einer gekrümmten Umbiegung (51) auf der Bereich des freien Endes, welcher rechtwinklig zur Ebene des Paneels der Basis (5) ist, und aus einer gekrümmten Umbiegung (71) auf der Bereich der Klappe (7) zusammensetzt, wobei die beiden gekrümmten Umbiegungen (51, 71) zum Zusammenfügen miteinander verschränkt werden.

3. Pfosten nach Anspruch 1 oder 2, **dadurch gekennzeichnet, dass** der Keil (9) einen Zapfen (91) sowie eine komprimierbaren Einsatz (11) aufweist, der den Zapfen (91) umgibt, welcher einen dreieckigen Querschnitt hat und druckbelastet ist, wenn er auf Höhe des Gelenks (51, 71) eingefügt ist.

4. Pfosten nach Anspruch 3, **dadurch gekennzeichnet, dass** der Zapfen (91) einen dreieckigen Querschnitt und der komprimierbare Einsatz (11) einen V-förmigen Querschnitt aufweist.

5. Pfosten nach einem der vorhergehenden Ansprüche, **dadurch gekennzeichnet, dass** der Keil (9) eine dekorative Verkleidung (95) aufweist, welche die Außenwände des Pfostens (3) zumindest abschnittsweise bedeckt, wenn der Keil (9) eingefügt ist.

6. Pfosten nach einem der vorhergehenden Ansprüche, **dadurch gekennzeichnet, dass** er einen Boden (21) aufweist, der mit einem Vorsprung (23) versehen ist, welcher eine Anschlagfläche aufweist, die zum Inneren der Fassade zeigt, an welcher der Pfosten angebracht ist, und dadurch, dass die Klappe (7) eine Kante (25) aufweist, die mit einer Anschlagfläche des Vorsprungs (23) in Eingriff gelangt, wenn das Paneel (1) zwischen der Klappe (5) und der Basis (7) eingeklemmt ist.

7. Pfosten nach Anspruch 6, **dadurch gekennzeichnet, dass** der Boden (21) Laschen (20) aufweist und die Basis (5) Schienen (27) aufweist, in welche die Laschen (20) im zusammengefügten Zustand eingreifen, und dadurch, dass er Bohrungen und Schrauben (15) zum Befestigung des Bodens (21) aufweist.

8. Pfosten nach Anspruch 7, **dadurch gekennzeichnet, dass** der Boden (21) eine Ausstülpung (193) aufweist, an welcher die Längsseitenfläche des Paneels (1) zur Anlage kommt, wenn dieses in dem Pfosten befestigt ist.

9. Pfosten nach dem vorstehenden Anspruch, **dadurch gekennzeichnet, dass** die Ausstülpung (193) ein Mittel zur Befestigung einer komprimierbaren Bodendichtung (131) aufweist, und dadurch, dass er darüber hinaus eine komprimierbare Bodendichtung (131) umfasst, die in das Befestigungsmittel eingefügt ist.

10. Pfosten nach dem vorhergehenden Anspruch, **dadurch gekennzeichnet, dass** die komprimierbare Bodendichtung (131) darüber hinaus an ihrem Ende, welches mit dem Boden (21) in Kontakt ist, eine Sohle aus Polymermaterial aufweist, welche im zusammengefügten Zustand in eine Aussparung (133) des Bodens (21) eingefügt ist und an welcher das Paneel (1) in Anlage kommt, wenn es eingebaut ist.

11. Pfosten nach einem der vorhergehenden Ansprüche, **dadurch gekennzeichnet, dass** die Basis (5) an mindestens einem der Bereiche Bohrungen zur Befestigung aufweist.

12. Pfosten nach einem der vorhergehenden Ansprüche, **dadurch gekennzeichnet, dass** die Basis (5) an beiden Bereichen Bohrungen zur Befestigung aufweist.

13. Pfosten nach einem der vorhergehenden Ansprüche, **dadurch gekennzeichnet, dass** die Basis (5) und die Klappe (7) durch Metallextrusion hergestellt sind.

14. Balkon, insbesondere französischer Balkon, **dadurch gekennzeichnet, dass** er mindestens einen Pfosten (3) nach einem der vorhergehenden Ansprüche und ein Paneel (1) umfasst, welches zwischen der Klappe (7) und der Basis (5) durch den Pfosten (3) eingeklemmt ist.

15. Sonnenschutzvorrichtung, **dadurch gekennzeichnet, dass** sie mindestens einen Pfosten (3) nach einem der vorhergehenden Ansprüche und ein Paneel (1) umfasst, welches zwischen der Klappe (7) und der Basis (5) durch den Pfosten (3) eingeklemmt ist.

## Claims

1. A post for securing a panel (1), comprising:
- - a base (5), having two faces (5a, 5b) which are substantially orthogonal with respect to each other, including:
* one face (5a) that is parallel to the plane of the panel (1), having a linear compression seal (13) at its free end, and
* one face (5b) orthogonal to the plane of the panel (1),
- a flap (7), hingedly connected with respect to the base (5) at the free end of the face (5b) orthogonal to the plane of the panel (1), carrying at its end opposite the hinge (51, 71) a complementary linear compression seal (13), the linear compression seals (13) compressing the panel (1) clamped between the base (5) and the flap (7) in the assembled state,
- a wedge (9), having an insert (11), inserted at the hinge (51, 71) between the base (5) and the flap (7) in the assembled state, which, when inserted, blocks said hinge (51, 71) in a position clamping the panel (1), **characterised in that** the wedge (9) comprises snap-fastening means (93), snap-fastened with the flap (7) and/or the base (5) when the wedge (9) blocks the hinge (51, 71).

2. The post according to claim 1, **characterised in that** the hinge (51, 71) is composed of a curved return (51) at the free end of the face orthogonal to the plane of the panel of the base (5), and a curved return (71) at the flap (7), the two curved returns (51, 71) being interlinked during assembly.

3. The upright according to claim 1 or claim 2, **characterised in that** the wedge (9) comprises a finger (91), and a compressible insert (11), surrounding the finger (91) of triangular section and stressed in compression when inserted at the hinge (51, 71).

4. The post according to claim 3, **characterised in that** the finger (91) comprises a triangular section, and the compressible insert (11) comprises a V-shaped section.

5. The post according to any one of the preceding claims, **characterised in that** the wedge (9) comprises a decorative façade, at least partially covering the external walls of the post (3) when the wedge (9) is inserted.

6. The post according to any one of the preceding claims, **characterised in that** it comprises a bottom (21) having a protuberance (23) with a stop surface which is orientated towards the interior of the façade on which the post is mounted, and **in that** the flap (7) comprises an ridge (25) which comes into engagement with the stop surface of the protuberance (23) when the panel (1) is clamped between the flap (5) and the base (7).

7. The post according to claim 6, **characterised in that** the bottom (21) has tabs (20) and the base (5) has rails (27) in which the tabs (20) are engaged in the assembled state, and **in that** it comprises apertures and screws (15) for securing the bottom (21).

8. The post according to claim 7, **characterised in that** the bottom (21) has a protrusion (193) against which the sidewall of the panel (1) comes to bear when it is secured in the post (3).

9. The post according to the preceding claim, **characterised in that** the protrusion (193) comprises a means for securing a bottom compression seal (131), and **in that** it further comprises a bottom compression seal (131) inserted into the securing means.

10. The post according to the preceding claim, **characterised in that** the bottom compression seal (131) further comprises a sole plate produced from a polymeric material at its end in contact with the bottom (21), inserted into a recess (133) in the bottom (21) in the assembled state, and against which the panel (1) comes to bear when installed.

11. The post according to any one of the preceding claims, **characterised in that** the base (5) comprises securing apertures on at least one of the faces.

12. The post according to any one of the preceding claims, **characterised in that** the base (5) comprises securing apertures on both faces.

13. The post according to any one of the preceding claims, **characterised in that** the base (5) and the flap (7) are produced by extruding metal.

14. A balcony, in particular of the French type, **characterised in that** it comprises at least one post (3) according to any one of the preceding claims and a panel (1) clamped by the post (3) between the flap (7) and the base (5).

15. A sunshade, **characterised in that** it comprises at least one post (3) according to any one of the preceding claims and a panel (1) clamped by the post (3) between the flap (7) and the base (5).
